# EUROPEAN PATENT APPLICATION

(11) **EP 4 715 510 A1**
(43) Date of publication of application: **25.03.2026**
(21) Application number: 24202307.5
(22) Date of filing: 24.09.2024
(51) Int. Cl.: G05D 1/60

(54) **CONFIGURING A ROUTE EXTENSION FOR A MINING MACHINE**

(71) Applicant: Sandvik Mining and Construction Oy, 33330 Tampere (FI)
(72) Inventor: SILVENTOINEN, Marko, 33311 Tampere (FI)
(74) Representative: Sandvik

(57) **Abstract**

Example embodiments relate to configuring a route for a mining machine. An apparatus may comprise: at least one processor; and at least one memory including program code, the at least one memory and the computer program code configured to, with the at least one processor, cause the apparatus at least to: receive a requested end position of the mining machine and a requested orientation of the mining machine at the end position; determine a route for navigation of the mining machine to the requested end position such that the mining machine is configured to be in the requested orientation when reaching the requested end position; extend the route from the requested end position in a predetermined driving direction of the mining machine to a position of a wheel block; and transmit a configuration of the extended route to the mining machine.

## Description

### TECHNICAL FIELD

Various example embodiments generally relate to the field of mining machines. Some example embodiments relate to configuring an extension of a route of a mining machine as part of a mining automation system.

### BACKGROUND

In various applications, such as for example underground mining, it may be desired to automate operations of mining machines such as drill rigs, mobile bolter machines, loaders, dumpers, or other mining vehicles. In mining automation systems, there may be one or more mining machines autonomously operating on a worksite, for example travelling along configured routes inside a mine.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for configuring a route for a mining machine is disclosed. The apparatus may comprise: at least one processor; and at least one memory including computer program code, the at least one memory and the computer program code configured to, with the at least one processor, cause the apparatus at least to: receive a requested end position of the mining machine and a requested orientation of the mining machine at the end position; determine a route for navigation of the mining machine to the requested end position such that the mining machine is configured to be in the requested orientation when reaching the requested end position; extend the route from the requested end position in a predetermined driving direction of the mining machine to a position of a wheel block; and transmit a configuration of the extended route to the mining machine.

According to a second aspect, a method for configuring a route for a mining machine is disclosed. The method may comprise: receiving a requested end position of the mining machine and a requested orientation of the mining machine at the end position; determining a route for navigation of the mining machine to the requested end position such that the mining machine is configured to be in the requested orientation when reaching the requested end position; extending the route from the requested end position in a predetermined driving direction of the mining machine to a position of a wheel block; and transmitting a configuration of the extended route to the mining machine.

According to a third aspect, an apparatus for configuring a route for a mining machine is disclosed. The apparatus may comprise: means for receiving a requested end position of the mining machine and a requested orientation of the mining machine at the end position; means for determining a route for navigation of the mining machine to the requested end position such that the mining machine is configured to be in the requested orientation when reaching the requested end position; means for extending the route from the requested end position in a predetermined driving direction of the mining machine to a position of a wheel block; and means for transmitting a configuration of the extended route to the mining machine.

According to a fourth aspect, a computer program, a computer program product, or a (non-transitory) computer-readable medium for configuring a route for a mining machine is disclosed. The computer program, computer program product, or (non-transitory) computer-readable medium may comprise program instructions which, when executed by an apparatus, cause the apparatus at least to: receive a requested end position of the mining machine and a requested orientation of the mining machine at the end position; determine a route for navigation of the mining machine to the requested end position such that the mining machine is configured to be in the requested orientation when reaching the requested end position; extend the route from the requested end position in a predetermined driving direction of the mining machine to a position of a wheel block; and transmit a configuration of the extended route to the mining machine.

According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining machine and a wheel block;
FIG. 2 illustrates an example of a mining machine communicatively coupled to a mining automation system;
FIG. 3 illustrates an example of orientations and articulation angle of a mining machine;
FIG. 4 illustrates an example of a route inside a mining tunnel;
FIG. 5 illustrates an example of a flow chart for configuring a route for a mining machine;
FIG. 6 illustrates an example of an apparatus configured to practise one or more example embodiments; and
FIG. 7 illustrates an example of a method for configuring a route for a mining machine.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Autonomous mining machines may be configured to operate under control of a mining automation system. For example, mapping solution may be configured to provide a user interface, including for example a three-dimensional (3D) visualization of a mine, to enable a user to select route start and end positions, optionally with preferred orientation, articulation angle, or type of the end position. Based on the user input the mining automation system may be configured to calculate a route between the start and end points.

Mechanical wheel blocks may be provided at certain positions in the mine, such as for example dumping points or loading points, in order to ensure that a mining machine is correctly placed for a respective operation. Placing the machine accurately to touch the wheel block may be however inaccurate, if the mining automation system considers the route to the wheel block as a whole. This may result in several test runs and tuning of the route after each test run, thereby requiring more time and resources to set up production areas and start production.

Example embodiments of the present disclosure provide methods that enable a mining machine to be more accurately placed against a wheel block in mining automation systems. For example, a user may be enabled to select an end position that is perpendicular to the wheel block and the mining automation system may be configured to extend the route to the wheel block, thereby resulting in more accurate placement of the mining machine against the wheel block. This reduces the time needed for setting up the mining automation system and therefore production efficiency may be improved.

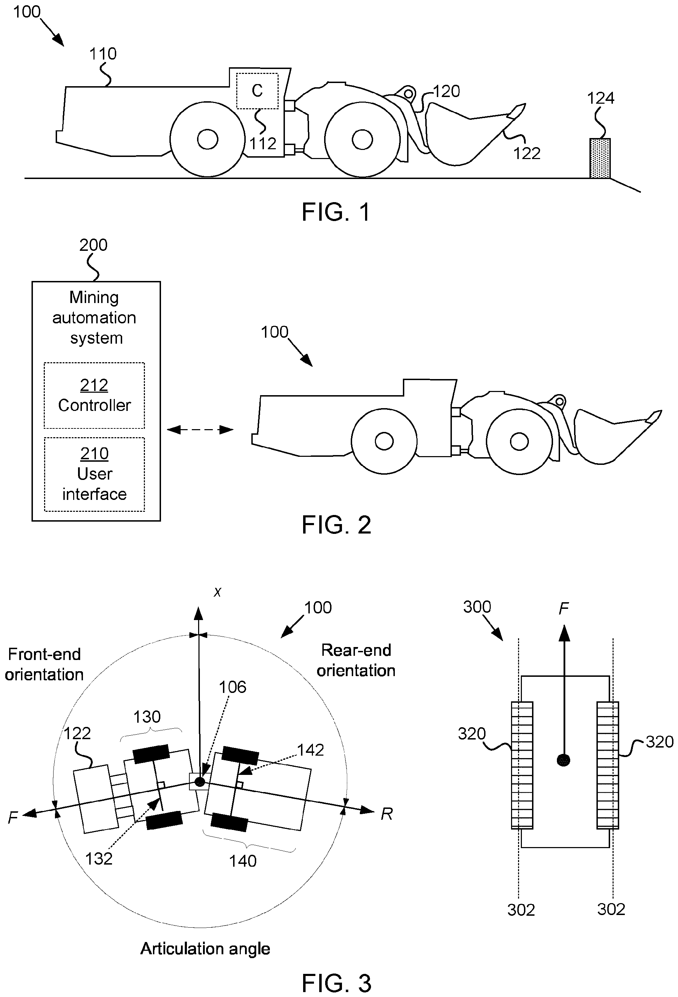

FIG. 1 illustrates an example of a mining machine. Example embodiments disclosed herein may relate to various mining machines, represented throughout the description by loader 100. However, it is appreciated that the example embodiments may be applied to other types of mining machines, such as loaders, dumpers, trucks, or the like.

Loader 100 may be an automated mining machine, for example an automated vehicle, e.g., a mining vehicle. Loader 100 may be equipped with tools configured for loading and transporting mining materials. An automated mining machine such as an automated loader machine operating in an automatic mode may be configured to, for example, receive a task to be performed, perceive (portions) of the environment of the automated vehicle, and autonomously perform the task while taking the environment into account. An automated mining machine operating in an automatic mode may be configured to operate independently but may be taken under external control at certain operation areas or conditions, such as during states of emergencies. Example embodiments of the present disclosure may be however applied also in non-autonomous or semi-autonomous mining machines, for example remote-controllable mining machines.

Loader 100 may comprise a movable carrier 110 and at least one boom 120 connected to movable carrier 110. Loader 100 may comprise a bucket 122, for example coupled to boom 120. Movable carrier 110 may comprise equipment for moving loader 100, such as for example a motor and wheels. Movable carrier 110 may be configured to move autonomously or it may be configured to be controlled by a human operator, either remotely or locally at loader 100. Boom 120 and bucket 122 may be configured to be controlled with, for example, mechanical switches or manual controllers installed at a user interface of loader 100 or a remote operator station, or by a controller 112 (e.g., a control apparatus) configured to control operation of loader 100. Controller 112 may be also configured to control other aspects of loader 100, such as parts of movable carrier 110 like the motor and wheels.

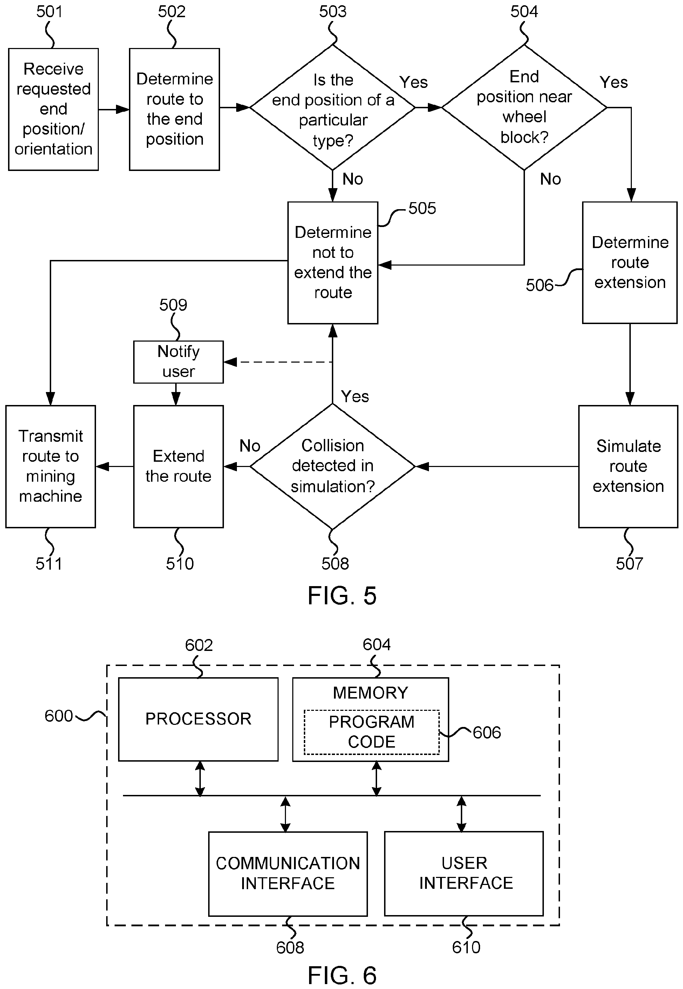

Controller 112 may be for example provided as a software application residing on a memory and being executable by a processor. An example of an apparatus suitable for implementing controller 112 is provided in FIG. 6. Controller 112 may comprise, or be communicatively coupled to, various functions, blocks, or applications for implementing functionality of controller 112. Controller 112 may comprise a navigation application configured to control, or enable a human operator or mining automation system 200 to control, navigation of loader 100, for example to enable movement of carrier 110, to move loader 100 to a loading position or dumping position, to move bucket 122 by controlling boom 120, or the like.

The worksite of loader 100 may comprise one or more wheel blocks 124. A wheel block may be provided at a position configured for performing certain operation such as dumping or loading of mining material. A wheel block may for example comprise an obstacle, which may be for example made of concrete, configured to prevent loader 100 from driving to an area behind the wheel block. A wheel block may be a rectangular obstacle, as illustrated in FIG. 1,or a wedgeshaped barrier, for example with a concave portion towards loader 100.

Loader 100 may be configured to be controlled by a remote control device (not illustrated in FIG. 1), which may be external to loader 100. The remote control device may be for example a server located remote from loader 100, for example outside the mine. Functionality of controller 112 may be distributed between loader 100, for example a local controller of loader 100, and the remote control device. Information may be exchanged between the remote control device and loader 100 over a communication interface including any suitable wireless and/or wired connection. Examples of suitable communication interfaces are described with reference to FIG. 6.

FIG. 2 illustrates an example of a mining machine communicatively coupled to a mining automation system. Mining automation system 200 may be responsible of controlling mining machines, for example by configuration of routes for the mining machines.

Mining automation system 200 may comprise controller 212, e.g., a control apparatus or control circuitry, which may be structurally similar to controller 112. For example, controller 212 may be provided as a software application residing on a memory and being executable by a processor. An example of an apparatus suitable for implementing controller 212 is provided in FIG. 6. Controller 212 may comprise, or be communicatively coupled to, various functions, blocks, or applications for implementing functionality of controller 212, e.g., within mining automation system 200. For example, controller 212 may comprise or be communicatively coupled to a data management server, which may be configured to store information such as a map of the mine, position(s) of wheel block(s), or the like. Example embodiments of the present disclosure may be implemented by controller 212, or mining automation system 200 in general. Information may be exchanged between mining automation system 200 and loader 100 over a communication interface including any suitable wireless and/or wired connection. Examples of suitable communication interfaces are described with reference to FIG. 6. Mining automation 200 may comprise a communication interface, which may be configured for transmission and/or reception of data from devices external to mining automation system 200. The communication interface is not illustrated in FIG. 2, but it may be similar to communication interface 610 of FIG. 6. Even though controller 122 or 212 have been described to perform some function, it is understood that such description may comprise causing performance of the function, e.g., by instructing other device or component to perform the function. In some example embodiments, mining automation system 200 may be partially provided at loader 100. For example, parts, e.g., particular software component(s), of mining automation system 200 might be provided external to loader 100 and configured, for example, to determine route(s) for loader 100 or determine operation zone(s) for loader 100. On the other hand, loader 100 might comprise other part(s) of mining automation system 200, for example parts configured to control loader 100. Therefore, in some example embodiments, mining automation system 200 may comprise controller 112.

FIG. 3 illustrates an example of orientations and articulation angle of a mining machine. Loader 100 may be an articulated mining vehicle, which may comprise an articulation point connecting its front and rear ends. An articulated mining vehicle may comprise pivot joint 106 that improves manoeuvrability of loader 100, for example when navigating through tight turns or uneven terrain.

An orientation of front end 130 of loader 100 may be defined with reference to a predefined axis, which may be parallel to ground or perpendicular to vector of gravity. The orientation of front end 130 may comprise an angle between a forward driving direction (F) of loader 100 and the predefined axis, e.g., on the plane perpendicular to the vector of gravity. A straight forward driving direction may comprise a direction that is substantially perpendicular to front axle 132 of loader 100. The front axle may be configured to connect front wheels of loader 100. The orientation of rear end 140 of loader 100 may comprise an angle between a backward (e.g., reverse) driving direction (R) of loader 100 and the predefined axis. A straight backward driving direction may comprise a direction that is substantially perpendicular to rear axle 142 of loader 100. The rear axle may be configured to connect rear wheels of loader 100. The articulation angle may comprise an angle between longitudinal axes of front end 130 and rear end 140, as illustrated in FIG. 3. Alternatively, the articulation angle may comprise an angle between front and rear axles 132, 142 of loader 100. In general, the articulation angle may be indicative of the orientation of front end 130 with respect to rear end 140. Front end 130 may be coupled to rear end 140 by pivot joint 106.

Even though illustrated as an articulated mining vehicle, corresponding definitions of orientation angles may be used also in case of a non-articulated mining machine. In that case the (straight) backward driving direction may be opposite to the forward driving direction. Furthermore, corresponding definitions of the orientation may be provided for other types of mining machines. For example, in case of a track-mounted mining machine 300 illustrated on the right, the (straight) forward driving direction or the (straight) backward driving direction may be parallel to lines 302 defined by tracks 320 of track-mounted mining machine 300. As illustrated in FIG. 3, lines 320 may be defined by the longitudinal direction of tracks 320.

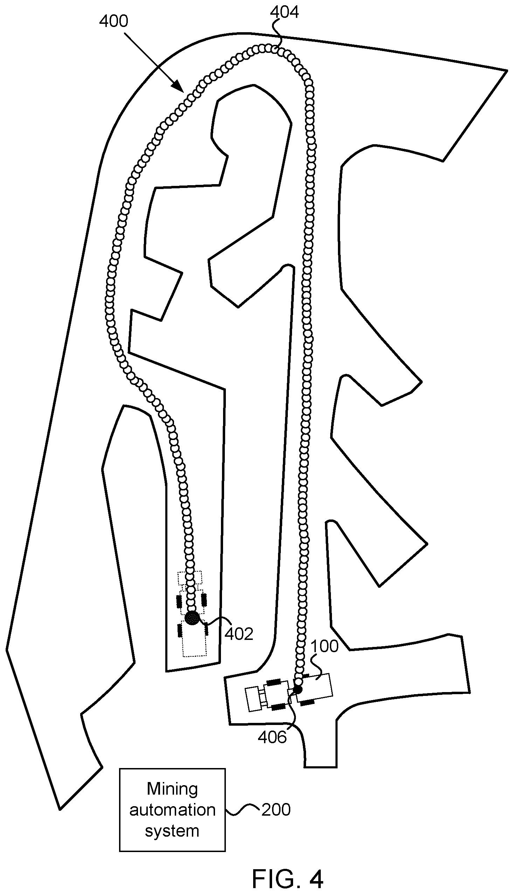

FIG. 4 illustrates an example of a route inside a mining tunnel. Route 400 may comprise a start position 402, a plurality of route points 404, and an end position 406. Route points 404 (white circles) may define the route from start position 402 to end position 406. Mining automation system 200 may be configured to determine the route and transmit a configuration of the route to loader 100, or any type of mining machine in general, as will be further described with reference to FIG. 5. Start position 402, route points 404, or end position 406 may be provided for example in a coordinate frame that is stationary with respect to ground. Even though the mine is illustrated as an underground mine, it is noted that the example embodiments described herein may be alternatively used in opencast mines.

FIG. 5 illustrates an example of a flow chart for configuring a route for a mining machine. Even though operations of FIG. 5 have been described to be performed by controller 212, it is understood that similar functionality may be implemented by any suitable component of mining automation system 200. Even though operations of FIG. 5 have been described using loader 100 as an example of a mining machine, similar functionality may be provided for other types of mining machines.

At operation 501, controller 212 may be configured to receive a requested end position of loader 100. Controller 212 may be further configured to receive a requested orientation of loader 100 at the requested end position. The requested orientation may comprise an orientation at which loader 100 is requested to be after travelling the route to the requested end position. The requested orientation may be associated with a task, for example loading or dumping mining material, configured to be performed at or near the requested end position. The requested orientation may comprise an orientation at which a mining machine such as loader 100 is requested to perform the task. The requested orientation may comprise a requested orientation of front end 130 of loader 100. However, depending on the type of mining machine, the orientation might comprise a requested orientation of the rear end of the mining machine (e.g., in case of a dumper). The orientation of loader 100 may also comprise a requested articulation angle of loader 100 at the requested end position. Controller 212 may be configured to receive an indication of the type of the requested end point. Controller 212 may be configured to receive the requested end position, optionally with the associated orientation, and/or the indication of the type of the requested end point, via user interface 210. Controller 212 may be for example configured to detect a position pointed by the user on a map of the mine as the requested end position. In response to receiving, via user interface 210, a selection of a particular type of end position (e.g., dumping position or loading position), controller 212 may be configured to provide, via user interface 210, a notification that the selection will cause route of loader 100 to be extended from the requested end position to the position of the wheel block. This provides the benefit of enabling to confirm the automatic extension of the route to the user, thereby improving user experience of mining automation system 200.

Alternatively, the requested end position, the associated orientation, and/or the type of the end position may be programmable. For example, controller 212 may be configured to receive the requested end position, optionally with the associated orientation and/or the indication of the type of the requested end point, from another device, for example via an external communication interface of mining automation system 200. Alternatively, controller 212 may be configured to retrieve the requested end position from an internal or external memory (e.g., via an external memory interface) associated with mining automation system 200.

Controller 212 may be configured to determine a start position of loader 100, for example in order to determine the route to the requested end position. Controller 212 may be configured to determine the start position by receiving it, for example similar to receiving the requested end position. Alternatively, controller 212 may be configured to determine the start position based on a current position of loader 100. For example, controller 212 might be configured to receive an indication of the current position of loader 100, e.g., from loader 100 or a positioning tracking system provided at the mine. Controller 212 may be configured to use the current position of loader 100 as the start position for the route.

The requested end position may be located at a position that is perpendicular to the wheel block, e.g., located on a line that is perpendicular to another line defined by the wheel block (e.g., the other line crossing the wheel block in its elongated direction). Controller 212 may be configured to request, via user interface 210, the user to place the end position in a perpendicular position with respect to the wheel block. Controller 212 may be for example configured to indicate, via user interface 210, one or more possible end positions that are located at perpendicular positions with respect to the wheel block. This provides the benefit of ensuring that a perpendicular route extension towards the wheel block from the end position selected by the user results in positioning of loader 100 against the wheel block.

At operation 502, controller 212 may be configured to determine the route to the requested end position. The route may be configured for navigation of loader 100 to the requested end position. Furthermore, controller 212 may be configured to determine the route such that loader 100 is configured to be in the requested orientation when reaching the requested end position. Controller 212 may be configured to determine route points 404 from start position 402 to end position 406 using any suitable method. Controller 212 may be configured to determine route points such that loader 100 arrives at end position 406 from a direction that causes loader 100 to be in the requested orientation at end position 406. For example, if the requested orientation of loader, e.g., its front end 130, is a particular angle, controller 212 may be configured to determine the route such that the end of the route comprises a straight line of route points in the direction defined by that angle.

Alternatively, controller 212 may be configured with a kinematic model of loader 100 and be configured to determine the route using the kinematic model. The kinematic model of loader 100 may comprise a mathematical description of at least a part of loader 100. The kinematic model may describe motion of loader 100 or component(s) of loader without taking into account the forces that cause the motion. The kinematic model may be used for estimating or simulating a position or orientation of loader 100, for example based on motion of loader 100 caused, or to be caused, by given control inputs. The kinematic model of loader 100 may comprise at least dimensions of loader 100, positions of motion control related components or parameters such as wheels and/or their steering angle range, or position or angular range of pivot joint 106. The kinematic model may thus enable modelling movement of loader 100, for example to determine an orientation of loader 100, or parts thereof, when arriving at the requested end position via certain route. Therefore, controller 212 may be configured to determine the route based on a simulation of movement of loader 100, using the kinematic model, and determine the route such that loader 100 is enabled to enter the end position in the requested orientation. The configuration of the route may comprise the requested orientation at the requested end position.

Determining the route to the requested end position may comprise simulating movement of loader 100 along the determined route, for example to determine whether movement of loader 100 along the determined route would cause a collision (e.g., with walls of a tunnel). The simulation may be based on simulating movement of loader 100 on a traversability map of the mine.

A traversability map may comprise a simplified representation of the mine, e.g., a two-dimensional (2D) map, configured with information suitable for evaluating plausibility of a certain route in the mine, for example height of a tunnel or angle of slope (e.g., steepness of the driving surface relative to the horizontal plane). The traversability may comprise data indicative of drivability of mining machine at a set of locations in the worksite. The traversability map may be alternatively called a drivability map. The traversability map may comprise or be based on a subset of points of a 3D model of the worksite. The traversability map may comprise a floor map comprising additional information on characteristics of the driving surface, e.g., tunnel floor, affecting operation of the mining machine. The traversability map may comprise a floor map into which additional information, for example, relating to obstacle height, floor slope, height of space, ground quality etc., have been coded.

Controller 212 may be configured to apply the kinematic model of loader 100 for simulating movement of loader 100 along the route, for example whether the loader 100 can travel the route considering for example the height of the tunnel or the available steering angle range of loader 100. Movement along the route may comprise real or simulated movement of loader 100 according to the route, for example such that a particular part of loader 100 is configured or intended to coincide with route points 404.

Controller 212 may be configured to apply one or more safety volumes, for example in order to determine whether loader 100 would collide with objects such as tunnel walls. A safety volume may comprise a volume in proximity of loader 100, for example particular part thereof. During the simulation, collision of the safety volume with an object such as a tunnel wall may be considered by controller 212 as a collision between the object and loader 100. A safety volume may therefore enable to provide a safety margin for avoiding collisions on the determined route. Controller 212 may be configured to determine the route, in response to confirming, by the simulation, that loader 100, or the safety volume(s), will not cause a collision along the route.

At operation 503, controller 212 may be configured to determine whether the requested end position is of a particular type, for example one of a plurality of predetermined types. Controller 212 may be configured to extend the route to a position of a wheel block for certain types such as for example dumping position, loading position, or a battery swap position, of in general any type of position that is equipped with a wheel block. Controller 212 may be configured to move to execution of operation 504, or directly to operation 506, in response to determining that the requested end position is of the particular type (e.g., dumping position, loading position, or a battery swap position).

It is however noted that operation 503 may be optional and controller 212 may be configured to determine to extend the route without considering the type of the requested end position, for example if all types of requested end positions configured for a mining machine are associated with a wheel block. Controller 212 may be configured to move to execution of operation 505, in response to determining that the requested end position is not of the particular type, for example in response to determining that the requested end position is of some other type (e.g., a passing position configured for passing another mining machine). Considering the type of the end point when determining whether to extend or not to extend the route provides the benefit of improving flexibility of the mining automation system by allowing different functionality for different types of end positions, while improving accuracy of placing a mining machine against a wheel block for some type of end positions.

At operation 504, controller 212 may be configured to determine whether the requested end position is near, for example within a predetermined distance (e.g., 10 m) from, a wheel block. This provides the benefit of ensuring that the requested end position is sufficiently close to the wheel block, in order to enable accurate positioning of loader 100 against the wheel block by an extension of the route. Accuracy of placing a mining machine against a wheel block may be therefore improved. Controller 212 may be configured with information about positions (e.g., coordinates) of wheel blocks. Controller 212 may be configured to determine the distance between the wheel block and the requested end position based on the coordinates of the requested end position and the nearest wheel block.

At operation 505, controller 212 may be configured to determine not to extend the route. Considering operations 503 and 504, this may be in response to determining that the requested end position is not of the particular type or in response to determining that the requested end position is not within the predetermined distance from a wheel block.

At operation 506, controller 212 may be configured to determine a route extension to obtain an extended route. Controller 212 may be configured to determine the extension of the route from the requested end position to the position of the wheel block, for example in a predetermined driving direction. In case of loader 100, the predetermined driving direction may be the forward driving direction. In case of other type(s) of mining machines such as dumpers, the predetermined driving direction might be the backward (e.g., reverse) driving direction. The predetermined driving direction may be therefore dependent on the type of the mining machine. Controller 212 may be configured to determine the predetermined driving direction based on the type of the mining machine. The predetermined driving direction may be towards a component (e.g., bucket 122) of the mining machine configured to perform an operation associated with the type of the end position.

Determining the extended route may comprise determining, by controller 212, additional route points 404 between the requested end position and the position of the wheel block, for example in a straight line towards the predetermined driving direction. The predetermined driving direction may comprise a straight forward driving direction or a straight backward driving direction. This provides the benefit of less complex calculation of the extended route and furthermore accurate positioning of loader 100 against the wheel block from the end position that is in a perpendicular position from the wheel block. Alternatively, or additionally, the extended route may comprise a curve, e.g., a set of route points defining a turn. End position 406 may be therefore located in a non-perpendicular position with respect to the wheel block. This provides the benefit of more accurate positioning of loader 100 against the wheel block, for example when there is limited space for manoeuvring loader 100.

At operation 507, controller 212 may be configured to simulate the route extension. Controller 212 may be for example configured to perform simulation of the movement of loader 100 along the route extension from the requested end position to the position of the wheel block. Controller 212 may be configured to perform the simulation as described with reference to operation 502.

However, in some embodiments controller 212 may be configured to disable at least one safety volume of loader 100 during performance of the simulation of movement of loader 100 along the extended route. The disabled safety volume may be located between loader 100 and the position of the wheel block, for example in front of front end 130 of loader 100 when the route is extended towards the forward driving direction of loader 100, or in front of the rear end of a dumper when the route is extended in the backward driving direction of the dumper. This provides the benefit of enabling mining machines to become, in the simulation, in close contact with the wheel block without a collision being detected in the simulation (e.g., due to bucket 122 colliding with wheel block 124). Accuracy of positioning a mining machine against a wheel block may be therefore improved without affecting the safety margin for simulating movement of the mining machine along the route to the requested end position.

At operation 508, controller 212 may be configured to determine whether a collision was detected in the simulation. Controller 212 may be configured to move to execution of operation 505 to determine not to extend the route, in response to determining, based on the simulation, that movement of loader 100 along the extended route would cause a collision. However, in some example embodiments controller 212 may be configured to move to execution of operation 509 from operation 508.

Controller 212 may be configured to move to execution of operation 510, in response to determining, based on the simulation, that the movement of loader 100 along the extended route will not cause a collision. This provides the benefit of enabling to avoid possible collisions along the extended route. It is however noted that performance of the simulation (cf., operation 507), and the subsequent determination of whether a collision was detected (cf., operation 508), may be optional.

At operation 509, controller 212 may be configured to provide, via user interface 210, a notification of the collision detected based on the simulation (cf. operation 508). The notification may comprise an indication, e.g., visualization, of a position at which the collision was detected. The notification provides the benefit of informing the user about the detected collision and thereby enabling the user to determine whether to accept the route extension regardless of the potential collision or to manually reconfigure the route or the route extension. Controller 212 may be configured to move from execution of operation 509 to execution of operation 510 automatically, e.g., in response to provision of the notification. Alternatively, controller 212 may be configured to move from execution of operation 509 to execution of operation 510, in response to receiving, via user interface 210, an indication of acceptance of the route extension. For example, controller 212 may be configured to output, via user interface 210, a query for requesting acceptance of the extension of the route.

At operation 510, controller 212 may be configured to perform the route extension, for example to extend the determined route from the requested end position in the predetermined driving direction of loader 100 to the position of the wheel block. Controller 212 may be configured to extend the route based on the route extension that was determined at operation 506. Considering operations 503, 504, and 508, controller 212 may be configured to extend the route, in response to one or more of the following: determining that the requested end position is of the particular type, determining that the requested end position is within the predetermined distance from the wheel block, or determining, based on the simulation of operation 508, that, the movement of loader 100 along the extended route will not cause a collision. The extension of the route may be therefore subject to one or more criteria, which enable the route to be extended when application of the extension is practical.

At operation 511, controller 212 may be configured to transmit, or cause transmission of, a configuration of the extended route to loader 100. For example, controller 212 may be configured to provide the extended route to a transmitter of mining automation system 200 for transmission of the extended route to loader 100. Controller 112 of loader 100 may be configured to, based on the configuration of the extended route received from mining automation system 200, control loader 100 to move along the extended route first to the requested end position and then along the route extension to the position of the wheel block. Any suitable method for communicating the extended route to loader 100 may be used. For example, controller 212 may be configured to transmit, or cause transmission of, the originally determined route and the route extension as a single route (e.g., in same control message). Alternatively, controller 212 may be configured to transmit, or cause transmission of, the originally determined route and the route extension separately, for example in different control messages.

Example embodiments of the present disclosure therefore provide a mining automation system with methods for automated extension of a route to a wheel block. A user may be enabled to manually set a requested end position of a mining machine near, e.g., up to 10 m from, the wheel block in the route end point, e.g., facing perpendicular towards the wheel block. The user may be further enabled to define the requested end position to be of a particular type (e.g., a dump point), which may be configured to trigger route extension from the requested end position to the wheel block. This enables the mining automation system to extend the route, for example such that tires of the mining machine touch the wheel block after movement along the route extension. Repositioning of the mining machine may be therefore performed with accuracy that may not be achievable by manually setting the end position at the position of the wheel block. This enables to speed up configuration of the route by reducing need for iterations, thus reducing commissioning time and enabling earlier production.

FIG. 6 illustrates an example of an apparatus 600 configured to practise one or more example embodiments. Apparatus 600 may be or comprise a control device, such as for example a server, communicatively coupled to loader 100, a control apparatus located at loader 100, controller 112, loader 100 itself, controller 212, mining automation system 200, or in general any apparatus or system configured to implement the functionality described herein. Although apparatus 600 is illustrated as a single device, it is appreciated that, wherever applicable, functions of apparatus 600 may be distributed to a plurality of physically separate apparatuses, for example different components or subsystems of mining automation system 200.

Apparatus 600 may comprise at least one processor 602. The at least one processor 602 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a specialpurpose computer chip, or the like.

Apparatus 600 may further comprise at least one memory 604. The at least one memory 604 may be configured to store, for example, computer program code or the like, for example operating system software and application software. The at least one memory 604 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 604 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 604 may be also embodied separate from apparatus 600, for example as a computer readable (storage) medium, examples of which include memory sticks, compact discs (CD), or the like.

When apparatus 600 is configured to implement some functionality, some component and/or components of apparatus 600, such as for example the at least one processor 602 and/or the at least one memory 604, may be configured to implement this functionality. Furthermore, when the at least one processor 602 is configured to implement some functionality, this functionality may be implemented using program code 606 comprised, for example, in the at least one memory 604.

The functionality described herein may be performed, at least in part, by one or more computer program product components such as software components. According to an example embodiment, apparatus 600 comprises a processor or processor circuitry, such as for example a microcontroller, configured by the program code 606, when executed, to execute the embodiments of the operations and functionality described herein. Program code 606 is provided as an example of instructions which, when executed by the at least one processor 602, cause performance of apparatus 600.

For example, controller 212 may be at least partially implemented as program code 606 configured to cause apparatus 600 to perform functionality of controller 212. Similarly, transmission or reception of data (e.g., indication(s) of the position(s) of mining machine(s) or control instructions) over an internal or external communication interface of mining automation system 200 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), or the like.

Apparatus 600 may comprise a communication interface 608 configured to enable apparatus 600 to transmit and/or receive information. Communication interface 608 may comprise an internal or external communication interface, such as for example a radio interface between loader 100 and mining automation system 200. Apparatus 600 may further comprise other components and/or functions such as for example user interface 610 comprising at least one input device and/or at least one output device. In case of mining automation system 200, user interface 610 may be similar to user interface 210. The input device may take various forms such as a keyboard, a touch screen, or one or more embedded control buttons. The output device may for example comprise a display, a speaker, or the like. User interface 610 may enable a user, e.g., a human operator, to monitor various functions and data, and to control the mining automation system, for example by attaching mining devices to operation zones upon a request to do so.

Apparatus 600 may be configured to perform or cause performance of any aspect of the method(s) described herein. Further, a computer program or a computer program product may comprise instructions for causing, when executed by apparatus 600, apparatus 600 to perform any aspect of the method(s) described herein. Further, apparatus 600 may comprise means for performing any aspect of the method(s) described herein. In one example, the means comprises the at least one processor 602, the at least one memory 604 including program code 606 (instructions) configured to, when executed by the at least one processor 602, cause apparatus 600 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 602. Apparatus 600 may comprise means for transmitting or receiving information, for example one or more wired of wireless (e.g., radio) transmitters or receivers, which may be coupled or be configured to be coupled to one or more antennas, or transmitter(s) or receiver(s) of a wired communication interface.

According to a first aspect of the present disclosure, an apparatus may be configured to configure a route for a mining machine. The apparatus may comprise: at least one processor; and at least one memory including computer program code, the at least one memory and the computer program code configured to, with the at least one processor, cause the apparatus at least to: receive a requested end position of the mining machine and a requested orientation of the mining machine at the end position; determine a route for navigation of the mining machine to the requested end position such that the mining machine is configured to be in the requested orientation when reaching the requested end position; extend the route from the requested end position in a predetermined driving direction of the mining machine to a position of a wheel block; and transmit a configuration of the extended route to the mining machine.

According to an example embodiment of the first aspect, the computer program code is configured to, with the at least one processor, cause the apparatus to: extend the route from the requested end position in the predetermined driving direction of the mining machine to the position of the wheel block, in response to determining that the requested end position is within a predetermined distance from the position of the wheel block.

According to an example embodiment of the first aspect, the computer program code is configured to, with the at least one processor, cause the apparatus to: extend the route from the requested end position in the predetermined driving direction of the mining machine to the position of the wheel block, in response to determining that the requested end position is of a particular type.

According to an example embodiment of the first aspect, the computer program code is configured to, with the at least one processor, cause the apparatus to: determine not to extend the route, in response to determining that the requested end position is not of the particular type.

According to an example embodiment of the first aspect, the particular type of the requested end position comprises a dumping position, a loading position, or a battery swap position.

According to an example embodiment of the first aspect, the computer program code is configured to, with the at least one processor, cause the apparatus to: determine not to extend the route, in response to determining that the requested end position is a passing position configured for passing another mining machine.

According to an example embodiment of the first aspect, the predetermined driving direction comprises a straight forward driving direction or a straight backward driving direction.

According to an example embodiment of the first aspect, the straight forward driving direction is perpendicular to a front axle of the mining machine, the straight backward driving direction is perpendicular to a rear axle of the mining machine, or the straight forward driving direction or the straight backward driving direction is parallel to lines defined by tracks of the mining machine.

According to an example embodiment of the first aspect, the requested orientation comprises a requested orientation of a front end of the mining machine, or the requested orientation comprises a requested orientation of a rear end of the mining machine.

According to an example embodiment of the first aspect, the requested orientation further comprises a requested articulation angle of the mining machine.

According to an example embodiment of the first aspect, the computer program code is configured to, with the at least one processor, cause the apparatus to: extend the route from the requested end position in the predetermined driving direction of the mining machine to the position of the wheel block, in response to determining, based on a simulation of movement of the mining machine along the extended route from the requested end position to the position of the wheel block, that the movement of the mining machine along the extended route will not cause a collision.

According to an example embodiment of the first aspect, the computer program code is configured to, with the at least one processor, cause the apparatus to: disable a safety volume between the wheel block and the mining machine during performance of the simulation of the movement of the mining machine along the extended route from the requested end position to the position of the wheel block.

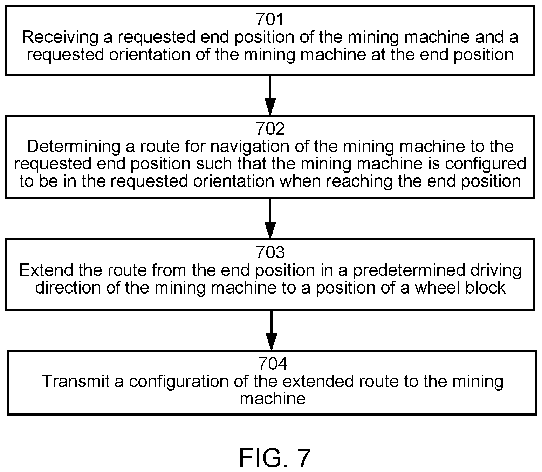

FIG. 7 illustrates an example of a method for configuring a route for a mining machine, according to a second aspect of the present disclosure. The method may comprise a computer-implemented method performed by, for example, apparatus 600 such as controller 212 or mining automation system 200.

At 701, the method may comprise receiving a requested end position of the mining machine and a requested orientation of the mining machine at the end position.

At 702, the method may comprise determining a route for navigation of the mining machine to the requested end position such that the mining machine is configured to be in the requested orientation when reaching the end position.

At 703, the method may comprise extending the route from the end position in a predetermined driving direction of the mining machine to a position of a wheel block.

At 704, the method may comprise transmitting a configuration of the extended route to the mining machine.

According to an example embodiment of the second aspect, the method comprises: extending the route from the requested end position in the predetermined driving direction of the mining machine to the position of the wheel block, in response to determining that the requested end position is within a predetermined distance from the position of the wheel block.

According to an example embodiment of the second aspect, the method comprises: extending the route from the requested end position in the predetermined driving direction of the mining machine to the position of the wheel block, in response to determining that the requested end position is of a particular type.

According to an example embodiment of the second aspect, the method comprises: determining not to extend the route, in response to determining that the requested end position is not of the particular type.

According to an example embodiment of the second aspect, the particular type of the requested end position comprises a dumping position, a loading position, or a battery swap position.

According to an example embodiment of the second aspect, the method comprises: determining not to extend the route, in response to determining that the requested end position is a passing position configured for passing another mining machine.

According to an example embodiment of the second aspect, the predetermined driving direction comprises a straight forward driving direction or a straight backward driving direction.

According to an example embodiment of the second aspect, the straight forward driving direction is perpendicular to a front axle of the mining machine, the straight backward driving direction is perpendicular to a rear axle of the mining machine, or the straight forward driving direction or the straight backward driving direction is parallel to lines defined by tracks of the mining machine.

According to an example embodiment of the second aspect, the requested orientation comprises a requested orientation of a front end of the mining machine, or the requested orientation comprises a requested orientation of a rear end of the mining machine.

According to an example embodiment of the second aspect, the requested orientation further comprises a requested articulation angle of the mining machine.

According to an example embodiment of the second aspect, the method comprises: extending the route from the requested end position in the predetermined driving direction of the mining machine to the position of the wheel block, in response to determining, based on a simulation of movement of the mining machine along the extended route from the requested end position to the position of the wheel block, that the movement of the mining machine along the extended route will not cause a collision.

According to an example embodiment of the second aspect, the method comprises: disabling a safety volume between the wheel block and the mining machine during performance of the simulation of the movement of the mining machine along the extended route from the requested end position to the position of the wheel block.

The method may be performed by controller 212 or mining automation system 200, for example based on program code 606, when executed by processor 602. Various examples of the methods are explained above with regard to functionalities of controller 212 or mining automation system 200 and are therefore not repeated here. It should be understood that example embodiments described may be combined in different ways unless explicitly disallowed.

According to a third aspect, an apparatus may comprise: means for receiving a requested end position of the mining machine and a requested orientation of the mining machine at the end position; means for determining a route for navigation of the mining machine to the requested end position such that the mining machine is configured to be in the requested orientation when reaching the requested end position; means for extending the route from the requested end position in a predetermined driving direction of the mining machine to a position of a wheel block; and means for transmitting a configuration of the extended route to the mining machine. The apparatus may comprise means for performing any example embodiment of the method of the second aspect.

According to a fourth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: receive a requested end position of the mining machine and a requested orientation of the mining machine at the end position; determine a route for navigation of the mining machine to the requested end position such that the mining machine is configured to be in the requested orientation when reaching the requested end position; extend the route from the requested end position in a predetermined driving direction of the mining machine to a position of a wheel block; and transmit a configuration of the extended route to the mining machine. The computer program, the computer program product, or the (non-transitory) computer-readable medium may comprise program instructions which, when executed by an apparatus, cause the apparatus to perform any example embodiment of the method of the second aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or". As used herein "at least one" or "one or more" may be understood as "any one of the at least one" or "any one of the one or more".

Although subjects may be referred to as 'first' or 'second' subjects, this does not necessarily indicate any order or importance of the subjects. Instead, such attributes may be used solely for the purpose of making a difference between subj ects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for configuring a route for a mining machine, the apparatus comprising:
at least one processor; and
at least one memory including program code, the at least one memory and the computer program code configured to, with the at least one processor, cause the apparatus at least to:
receive a requested end position of the mining machine and a requested orientation of the mining machine at the end position;
determine a route for navigation of the mining machine to the requested end position such that the mining machine is configured to be in the requested orientation when reaching the requested end position;
extend the route from the requested end position in a predetermined driving direction of the mining machine to a position of a wheel block; and
transmit a configuration of the extended route to the mining machine.

2. The apparatus according to claim 1, wherein the computer program code is further configured to, with the at least one processor, cause the apparatus to:
extend the route from the requested end position in the predetermined driving direction of the mining machine to the position of the wheel block, in response to determining that the requested end position is within a predetermined distance from the position of the wheel block.

3. The apparatus according to claim 1 or 2, wherein the computer program code is further configured to, with the at least one processor, cause the apparatus to:
extend the route from the requested end position in the predetermined driving direction of the mining machine to the position of the wheel block, in response to determining that the requested end position is of a particular type.

4. The apparatus according to claim 3, wherein the computer program code is further configured to, with the at least one processor, cause the apparatus to:
determine not to extend the route, in response to determining that the requested end position is not of the particular type.

5. The apparatus according to claim 3 or 4, wherein the particular type of the requested end position comprises a dumping position, a loading position, or a battery swap position.

6. The apparatus according to claim 4 or 5, wherein the computer program code is further configured to, with the at least one processor, cause the apparatus to:
determine not to extend the route, in response to determining that the requested end position is a passing position configured for passing another mining machine.

7. The apparatus according to any of claims 1 to 6, wherein the predetermined driving direction comprises a straight forward driving direction or a straight backward driving direction.

8. The apparatus according to claim 7, wherein the straight forward driving direction is perpendicular to a front axle of the mining machine, wherein the straight backward driving direction is perpendicular to a rear axle of the mining machine, or wherein the straight forward driving direction or the straight backward driving direction is parallel to lines defined by tracks of the mining machine.

9. The apparatus according to any of claims 1 to 9, wherein the requested orientation comprises a requested orientation of a front end of the mining machine, or wherein the requested orientation comprises a requested orientation of a rear end of the mining machine.

10. The apparatus according to claim 10, wherein the requested orientation further comprises a requested articulation angle of the mining machine.

11. The apparatus according to any of claims 1 to 10, wherein the computer program code is further configured to, with the at least one processor, cause the apparatus to:
extend the route from the requested end position in the predetermined driving direction of the mining machine to the position of the wheel block, in response to determining, based on a simulation of movement of the mining machine along the extended route from the requested end position to the position of the wheel block, that the movement of the mining machine along the extended route will not cause a collision.

12. The apparatus according to claim 11, wherein the computer program code is further configured to, with the at least one processor, cause the apparatus to:
disable a safety volume between the wheel block and the mining machine during performance of the simulation of the movement of the mining machine along the extended route from the requested end position to the position of the wheel block.

13. A method for configuring a route for a mining machine, the method comprising:
receiving a requested end position of the mining machine and a requested orientation of the mining machine at the requested end position;
determining a route for navigation of the mining machine to the requested end position such that the mining machine is configured to be in the requested orientation when reaching the requested end position;
extending the route from the requested end position in a predetermined driving direction of the mining machine to a position of a wheel block; and
transmitting a configuration of the extended route to the mining machine.

14. The method according to claim 12, further comprising:
extending the route from the requested end position in the predetermined driving direction of the mining machine to the position of the wheel block, in response to determining that the requested end position is within a predetermined distance from the position of the wheel block.

15. A computer program comprising instructions which, when executed by an apparatus, cause the apparatus at least to:
receive a requested end position of the mining machine and a requested orientation of the mining machine at the requested end position;
determine a route for navigation of the mining machine to the requested end position such that the mining machine is configured to be in the requested orientation when reaching the requested end position;
extend the route from the requested end position in a predetermined driving direction of the mining machine to a position of a wheel block; and
transmit a configuration of the extended route to the mining machine.
